# Europäisches Patentamt
# European Patent Office
# Office européen des brevets

(11) Numéro de publication: **0 124 433**
**B1**

(19)

(12) **FASCICULE DE BREVET EUROPÉEN**

(45) Date de publication du fascicule du brevet:
**29.06.88**

(21) Numéro de dépôt: **84400825.0**

(22) Date de dépôt: **24.04.84**

(51) Int. Cl.⁴: **F 16 M 1/026,** F 02 F 7/00,
F 01 L 1/04

(54) Boîtier amovible de distribution pour moteur à explosion ou à combustion.

(30) Priorité: **29.04.83 FR 8307159**

(43) Date de publication de la demande:
**07.11.84 Bulletin 84/45**

(45) Mention de la délivrance du brevet:
**29.06.88 Bulletin 88/26**

(84) Etats contractants désignés:
**DE GB IT**

(56) Documents cité:
**EP-A-0 071 972**
**DE-A-3 010 326**
**DE-A-3 012 417**
**DE-B-1 292 942**
**GB-A-1 129 147**
**US-A-2 010 056**
**US-A-2 303 093**
**US-A-2 974 660**

**G. KÖHLER et al.: "Maschinenteile", partie 1, 1972,
page A 39, Teubner-Verlag, Stuttgart, DE;**

(73) Titulaire: **COMPAGNIE DES TRANSMISSIONS
MECANIQUES SEDIS, Tour Avenir Ouest 64, Rue
du 8 Mai 1945, F-92025 Nanterre Cédex (FR)**
Titulaire: **SACHS- HURET S.A., 60, Avenue Félix
Faure, F-92000 Nanterre (FR)**

(72) Inventeur: **Kohler, Bernard, 45 Allée de la Forêt,
F-78170 La Celle St Cloud (FR)**

(74) Mandataire: **Moncheny, Michel, c/o Cabinet
Lavoix 2 Place d'Estienne d'Orves, F-75441 Paris
Cedex 09 (FR)**

EP 0 124 433 B1

## Description

La présente invention est relative à un boîtier amovible de distribution, notamment du type à chaîne, se présentant sous forme d'un tout unitaire rapporté sur une des faces d'extrémité du moteur pour assurer la liaison synchrone entre le vilebrequin et l'arbre à cames.

L'entraînement de l'arbre à cames en synchronisme avec le vilebrequin est à présent réalisé suivant trois grands types, à savoir par engrenage, par chaîne ou par courroie crantée.

Historiquement, l'entraînement de l'arbre à cames a été tout d'abord réalisé à l'aide de pignons, ultérieurement à l'aide d'une chaîne de distribution montée entre un pignon solidaire de l'extrémité du vilebrequin et une roue d'arbre à cames solidaire de l'extrémité de l'arbre à cames dans le cas d'un moteur à arbre à cames en tête. La chaîne de distribution circule entre le pignon et la roue dans des logements ménagés dans le carter inférieur, le bloc cylindre et la culasse qui sont les trois grands éléments rapportés du moteur. La chaîne de distribution est lubrifiée à partir de l'huile moteur contenue dans le carter inférieur et il y a donc nécessité de réaliser une étanchéité à l'huile entre les diverses jonctions frontales du carter inférieur, du bloc moteur et de la culasse au niveau du logement frontal dans lequel circule la chaîne. Cette étanchéité doit notamment être réalisée dans un plan vertical parallèle aux faces d'extrémité du moteur compte tenu des tolérances d'usinage des trois éléments mentionnés précédemment, ce qui conduit à réaliser une reprise éventuelle d'usinage de cette face d'extrémité frontale de la culasse, du bloc moteur et du carter inférieur, ce qui, au niveau de la production en série, est une phase de reprise coûteuse.

Afin de remédier à la conception compliquée du logement de chaîne dans le bloc cylindre, la culasse et le carter inférieur, et notamment pour résoudre les problèmes d'étanchéité, on a par exemple réalisé l'entraînement de l'arbre à cames à l'aide d'un système d'entraînement extérieur au moteur constitué par une courroie crantée réalisée en un élastomère armé. Cette courroie crantée comporte des crans qui coopèrent avec des pignons munis d'alvéoles correspondants, respectivement solidaires de l'extrémité de l'arbre à cames et de l'extrémité du vilebrequin, assurant l'entraînement en synchronisme de ces deux arbres.

Ce système est totalement extérieur au moteur et, donc, soumis à l'environnement extérieur, et notamment aux projections graisseuses ou huileuses toujours présentes autour d'un moteur ainsi qu'aux poussières et à l'eau soulevées par le roulement sur le sol du véhicule, aux insectes, etc. On observe ainsi un encrassement des alvéoles des pignons sur lesquels engrène la courroie crantée, qui peuvent ainsi être partiellement comblés et provoquer un échappement de la courroie de ces alvéoles, et par là même un défaut de calage de la distribution. Il peut même y avoir rupture de la courroie lorsque la neige ou la glace se trouvent emprisonnées entre crans et alvéoles, par augmentation du diamètre primitif.

On a donc tenté de remédier à cette difficulté en isolant la courroie crantée et ses pignons dans un carter protecteur, mais on se heurte alors à une difficulté due à l'échauffement normal du système en cours de fonctionnement, qui conduit à des températures inadaptées pour le fonctionnement correct de la courroie en matériau élastomère.

Par ailleurs, bien que la distribution par courroie crantée présente des différences au niveau des fréquences sonores de fonctionnement par rapport à la transmission par chaînes, on doit noter que ces courroies crantées présentent une fragilité certaine et une longévité bien moindre que les chaînes classiques. D'autre part, afin de supporter les couples résistants engendrés au niveau de l'arbre à cames, il est nécessaire de concevoir des courroies crantées ainsi que les pignons correspondants avec lesquels elles coopèrent, de dimensions suffisantes compte tenu de la puissance du moteur, ce qui bien évidemment accroît le poids et l'encombrement de l'ensemble de distribution.

Le GB-A-1 129 147 décrit un boîtier rapporté sur l'une des faces du moteur, contenant une roue d'arbre à cames prépositionnée sur l'extrémité de celui-ci pour assurer, à partir d'un mouvement d'entrée commandé par le vilebrequin, un mouvement de sortie en synchronisme avec le mouvement d'entrée. Dans ce dispositif la transmission est assurée exclusivement par des pignons, le pignon de vilebrequin devant être fixé au vilebrequin avant montage du boîtier.

Le jeu de pignons de ce boîtier rend sa réalisation très onéreuse et exige un montage extrêmement précis, donc peu aisé.

La présente invention vise à fournir un ensemble de distribution sous forme d'un boîtier compact permettant un calage préétabli de la distribution ayant une grande longévité et amovible sans modification du calage de la distribution du moteur.

L'invention a ainsi pour objet un boîtier cassette de distribution pour moteur à explosion ou à combustion formé par au moins deux flasques solidarisés entre eux, comprenant une roue d'arbre à cames prépositionnée pour assurer à partir d'un mouvement d'entrée commandé par un vilebrequin un mouvement de sortie en synchronisme avec le mouvement d'entrée, ce boîtier étant étanche après avoir été rapporté sur l'une des faces du moteur.

La présente invention vise en particulier à fournir un ensemble de distribution du type à chaîne dans lequel les avantages de la chaîne en ce qui concerne sa longévité et son aptitude à transmettre des couples élevés puissent être conservés, tout en éliminant les problèmes afférents aussi bien à la conception des logements de chaîne qu'à l'étanchéité de ces derniers et d'autre part, gain en encombrement et poids de l'ensemble de la fonction par rapport à la solution intégrant la chaîne dans le bloc moteur.

Suivant l'invention , ce boîtier cassette contient au moins un pignon de vilebrequin et un pignon d'arbre de pompe à injection prépositionnés et préorientés dans ledit boîtier, ainsi qu'une chaîne engrenant, avec les pignons et assurant un calage préétabli de la distribution pour permettre une rotation de l'arbre de pompe à injection et de l'arbre à cames en synchronisme avec le vilebrequin.

Le boîtier selon la présente invention est constitué d'un tout unitaire rapporté sur une des faces du moteur et dont l'étanchéité n'a à être réalisée qu'au niveau des passages des arbres, indépendamment des différences des tolérances respectives frontales d'usinage de la culasse, du bloc cylindre et du carter inférieur. Ce boîtier, dont l'orientation préalable des roues et pignons est soigneusement réalisée, évite un ajustement habituellement réalisé sur la chaîne de montage, ce qui constitue un avantage considérable.

Selon une caractéristique de la présente invention, les pignons engrènant avec la chaîne de distribution placée dans le boîtier sont montés libres et maintenus en place à l'aide de moyens de positionnement.

Ces moyens de positionnement peuvent être, par exemple, des nervures en arc de cercle délimitant un logement pour chaque pignon respectif.

Le boîtier comporte éventuellement avant son montage sur le moteur des moyens de positionnement angulaire amovibles constitués par un gabarit, par exemple en matière plastique, permettant d'immobiliser les pignons et roues respectifs dans une position angulaire déterminée.

L'invention est exposée ci-après plus en détail à l'aide de dessins annexés, qui en représentent un mode de réalisation.

Sur ces dessins:

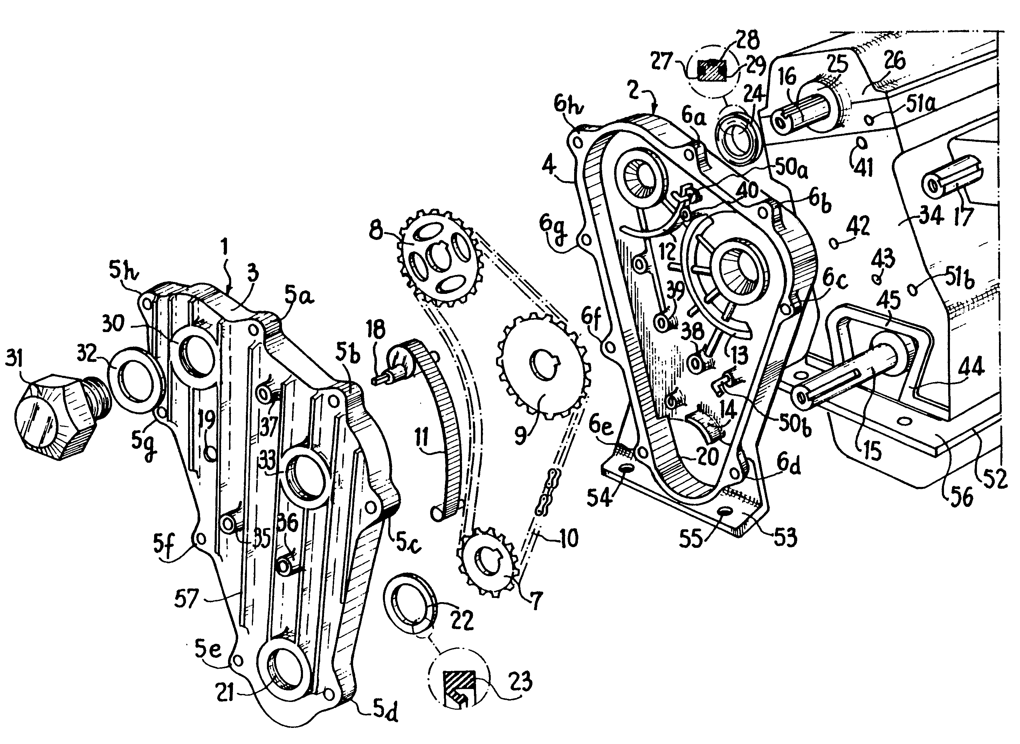

La Figure unique est une vue éclatée en perspective du boîtier amovible de distribution du type à chaîne selon la présente invention.

Le boîtier amovible selon la présente invention est constitué de deux flasques 1 et 2 comportant à leur périphérie des rebords 3 et 4 munis de bossages respectivement 5a-h et 6a-h percés d'orifices taraudés pour l'assemblage des deux flasques à joint étanche. Dans le boîtier obtenu après assemblage des flasques 1 et 2 sont logés un pignon de vilebrequin 7, une roue d'arbre à cames 8 et une roue 9 d'entraînement d'un autre organe du moteur tel qu'une pompe d'injection, ces pignons étant reliés par une chaîne 10 dont le brin mou est mis en tension à l'aide d'un tendeur 11. Les pignons et roues 7, 8 et 9 sont positionnés dans le boîtier à l'aide de nervures 12, 13 et 14 en arc de cercle ménagées sur les parois internes des flasques 1 et 2 et épousant le contour des pignons. Ces organes de positionnement 12, 13 et 14 servent à maintenir les pignons en place avant le montage du boîtier sur le moteur.

En effet, les pignons 7, 8 et 9 sont montés directement par clavetage, respectivement sur les extrémités de sortie du vilebrequin 15, de l'arbre à cames 16 et de l'arbre 17 de pompe à injection.

Le tendeur de chaîne 11 est du type à lame et comporte un organe de commande 18 traversant un orifice 19 ménagé dans le flasque 1 de façon à ne mettre la chaîne en tension qu'après montage du boîtier sur les divers arbres 15, 16 et 17.

L'extrémité du vilebrequin 15 traverse le flasque 2 par un orifice 20, puis le pignon 7 auquel il est claveté et un orifice 21 ménagé dans le flasque 1 pour faire saillie de l'autre côté du boîtier selon la présente invention et recevoir éventuellement des poulies d'entraînement non représentées, destinées à une transmission de puissance à d'autres accessoires du moteur. L'étanchéité au niveau de l'orifice 21 est réalisée par un joint 22 dont le profil, par exemple à lèvre est représenté en 23, ou tout autre joint connu.

La libre communication de moteur entre la culasse et le boîtier et l'étanchéité de cette jonction par rapport à l'extérieur de ces deux parties, au niveau de l'extrémité de sortie de l'arbre à came 16, est obtenue par la suppression de son joint a lèvres, par exemple, et son remplacement dans une forme préférée de l'invention, par une bague 24 logée dans un orifice 25 correspondant ménagé dans l'ensemble 26 culasse- couvre-culasse. Cette bague 24, dont la section droite est représentée en détail, est destinée a rattraper les tolérances d'usinage apparaissant dans l'entre-axe du vilebrequin et de l'arbre à cames. La bague 24 comporte trois gorges circonférentielles 27, 28 et 29 ménagées dans chacune des trois faces non en contact avec l'arbre 16, recevant des joints toriques assurant eux-mêmes l'étanchéité. Cette bague 24 assure le rattrapage tolérances non seulement vis-à-vis de l'entre-axe du vilebrequin et de l'arbre a cames, mais également des décalages de la surface frontale de la culasse et du bloc-cylindre. Tout autre système d'étanchéité connu peut être adopté.

L'extrémité de l'arbre à cames 16 est clavetée à la roue 8 qui est arrêtée sur l'arbre par une vis non représentée accessible par un orifice taraudé 30 ménagé dans le flasque 1 et fermé par un bouchon 31 et un joint d'étanchéité 32.

Le flasque 1 comporte de même un orifice taraudé 33 fermé par un bouchon non représenté permettant l'accès à l'extrémité de l'arbre 17 de pompe d'injection pour claveter et arrêter la roue 9 sur cet arbre.

Le boîtier constitué des flasques 1 et 2 assemblés, est fixé sur la face plane frontale d'extrémité du bloc-cylindre 34 à l'aide de vis traversant les bossages de renfort alésés 35, 36, 37 du flasque 1, et des entretoises 38, 39 et 40 du flasque 2, qui sont vissées dans des trous taraudés correspondant 41, 42, 43 ménagés dans le bloc-cylindre.

L'étanchéité entre l'orifice 20 et l'échancrure 44 ménagée dans le bloc-cylindre est réalisée par un joint plat non représenté sur la surface d'appui 45 usinée.

La chaîne de distribution 10 est lubrifiée par l'huile du moteur provenant de la culasse en communication avec l'intérieur du boîtier au niveau du passage de l'arbre à cames 16 a travers le flasque 2 et par un ou plusieurs conduits 50a, 50b communiquant avec le circuit de lubrification 51a, 51b du moteur. Les conduits 50a et 50b peuvent être dirigés de façon à projeter directement l'huile sur la chaîne 10 qui sert alors de rampe pour le retour de l'huile a la partie inférieure du boîtier communiquant par l'orifice 20 dans le carter 52. L'écoulement et la projection de l'huile moteur a l'intérieur du boîtier favorisent le refroidissement de l'huile par ruissellement sur les parois volontairement nervurées en forme d'ailettes 57 du flasque 1 qui joue ainsi en outre le rôle de surface d'échange thermique.

Dans le mode de réalisation illustré, le flasque 2 comporte à sa partie inférieure une patte 53 munie de trous 54, 55 pour le passage de vis de fixation au rebord 56 du carter 52.

Le boîtier de distribution amovible du type à chaîne sel on la présente invention est préalablement monté sur un gabarit permettant un calage de la distribution, alors que le tendeur de chaîne 11 est maintenu bandé afin de n'exercer aucune action de tension sur la chaîne.

Ce gabarit sert de moyens de positionnement angulaire amovibles et peut être réalisé, par exemple, en une structure en matière plastique sensiblement plane de laquelle font saillie des tétons cylindriques comportant une nervure, qui coopèrent avec les pignons et roues et leurs rainures de clavettes respectives pour fixer les positions angulaires.

Ce gabarit n'a pas été représenté sur les dessins, car il n'est qu'un moyen temporaire dont la fonction est essentiellement liée au processus de montage.

Lorsque le boîtier selon la présente invention doit être assemblé sur moteur sur les lignes de montage automobile, on positionne ce boîtier, gabarit en place, sur les sorties de vilebrequin, d'arbre à cames et de pompe à injection préalablement orientés, on enlève le gabarit et on arrête les roues et pignons 7, 8 et 9 sur les arbres correspondants. On place les bouchons d'obturation des orifices 30, 33 et éventuellement 21 ou les poulies devant être fixées sur l'extrémité du vilebrequin 15 et on commande à l'aide de l'organe 18 la mise sous tension de la chaîne 10 par le tendeur 11.

L'utilisation d'un tel boîtier de distribution amovible permettant un calage préalable de la distribution évite un nouveau réglage sur une chaîne de montage. Par ailleurs, étant donné que le boîtier de distribution est étanche à l'huile, et rapporté sur la face d'extrémité du bloc-cylindre, on n'a pas à usiner le plan vertical de joint entre le bloc cylindre, la culasse et le carter inférieur, ce qui est d'un grand intérêt pour la commodité et la rapidité de fabrication du moteur.

Le boîtier de distribution est étanche à tout agent extérieur et en particulier à la poussière ou

l'eau, il est lubrifié par l'huile du moteur et joue en outre un rôle de retour dans la circulation d'huile de lubrification ainsi que de refroidissement de la température de l'huile à une valeur optimale.

En effet, l'huile issue de la partie supérieure du circuit de lubrification peut être envoyée directement sur la chaîne qui sert alors de rampe pour un retour rapide de l'huile vers le carter inférieur, ce qui est très favorable dans le cas de régimes de rotation élevés du moteur où les parties hautes du moteur sont lubrifiées en excès, compte tenu du débit imposé de redescente de l'huile par gravité dans le circuit de retour au carter et à la pompe.

Ce type de boîtier de distribution amovible permet en outre de changer la chaîne et ses pignons sans modifier le calage de la distribution, puisqu'un autre boîtier peut lui être substitué.

On observe par ailleurs un gain d'encombrement par rapport aux courroies crantées et aux solutions du type à chaîne intégrée au bloc-moteur, ainsi également qu'un gain de poids par rapport à la courroie crantée. En effet, on peut réduire substantiellement, d'une valeur pouvant atteindre 30 % ou pus le poids des pièces en mouvement par rapport à la solution utilisant une courroie crantée.

Enfin, il est bien connu que la longévité des chaînes est beaucoup plus importante que celle des courroies crantées et que la conservation des caractéristiques de calage est fonction de la durée de fonctionnement utile de la chaîne, alors que la courroie peut être détruite brutalement sans signe avant-coureur et avec les conséquences qui peuvent résulter, d'un blocage en pleine vitesse du groupe motopropulseur.

Le boîtier de distribution amovible du type à chaîne selon la présente invention peut être réalisé par moulage dans un alliage léger, ou dans tout autre matière résistant à l'huile aux températures de fonctionnement rencontrées. Ce boîtier peut être réalisé en deux parties et assemblé par des vis, ou bien on peut prévoir de sceller le boîtier par de moyens non démontables afin d'alléger l'ensemble.

**Revendications**

1. Boîtier cassette de distribution pour moteur à explosion ou à combustion, formé par au moins deux flasques solidarisés entre eux, comprenant une roue (8) d'arbre à cames prépositionnée pour assurer à partir d'un mouvement d'entrée commandé par un vilebrequin (15) un mouvement de sortie (16) en synchronisme avec le mouvement d'entrée, ce boîtier étant étanche apres avoir été rapporté sur l'une des faces du moteur, caractérisé en ce qu'il contient au moins un pignon (7) de vilebrequin et un pignon (9) d'arbre de pompe à injection prépositionnés et préorientés dans ledit boîtier, et ainsi qu'une chaîne (10) engrenant avec les pignons (7, 8, 9) et assurant un calage préétabli de la distribution pour permettre une rotation de l'arbre de pompe à injection (17) et de l'arbre à cames (16) en synchronisme avec le vilebrequin (15).

2. Boîtier selon la revendication 1, caractérisé en ce que les pignons (7, 8, 9) sont montés libres dans le boîtier et maintenus en place par des moyens de positionnement (12, 13, 14).

3. Boîtier selon la revendication 2, caractérisé en ce que les moyens de positionnement (12, 13, 14) sont des nervures en arc de cercle épousant le contour des roues et pignons.

4. Boîtier selon l'une des revendications précédentes, caractérisé en ce qu'il comprend en outre des moyens de positionnement angulaire amovibles.

5. Boîtier selon la revendication 4, caractérisé en ce que les moyens de positionnement amovibles sont constitués par une structure sensiblement plane de laquelle font saillie des tétons cylindriques comportant une nervure, qui coopèrent avec les pignons et roues (7, 8, 9) et leurs rainures de clavettes respectives pour fixer les positions angulaires des pignons et roues.

6. Boîtier selon l'une des revendications précédentes, caractérisé en ce qu'il est prévu, outre la lubrification par le passage de l'arbre à cames (16) à travers le flasque (2), des moyens de lubrification (50a, 50b) de la chaîne (10) communiquant avec le circuit de lubrification (51a, 51b) du moteur, et des ailettes (57) sont ménagées sur la paroi interne du flasque (1) le plus éloigné de la face d'extrémité du moteur, l'huile de lubrification du moteur étant refroidie par ruissellement sur cette paroi interne.

## Patentansprüche

1. Steuergehäusekasten für eine Explosions- oder Brennkraftmaschine, bestehend aus mindestens zwei miteinander verbundenen Gehäuseschildern, mit einem Rad (8) einer Nockenwelle, um abhängig von einer gesteuerten Eingangsbewegung einer Kurbelwelle (15) eine damit synchrone Ausgangsbewegung (16) zu sichern, wobei der Gehäusekasten nach der Befestigung an einer der Motorseiten dicht ist, dadurch gekennzeichnet, daß der Gehäusekasten mindestens ein Kurbelwellenritzel (7) und ein Ritzel (9) der Einspritzpumpenwelle vorgeordnet und vororientiert aufnimmt, sowie daß eine Kette (10) in die Ritzel (7, 8, 9) eingreift und eine Voreinstellung der Steuerung sichert, so daß sich die Einspritzpumpenwelle (17) und die Nockenwelle (16) synchron mit der Kurbelwelle (15) drehen.

2. Gehäuse nach Anspruch 1, dadurch gekennzeichnet, daß die Ritzel (7, 8, 9) frei in dem Gehäuse angeordnet sind und durch Positioniermittel (12, 13, 14) in ihrer Stellung gehalten sind.

3. Gehäuse nach Anspruch 2, dadurch gekennzeichnet, daß die Positioniermittel (12, 13, 14) kreisbogenförmige, sich der Kontur der Ritzel anpassende Rippen sind.

4. Gehäuse nach einem der vorgenannten Ansprüche, dadurch gekennzeichnet, daß das Gehäuse außerdem lösbare winkelförmige Positioniermittel aufweist.

5. Gehäuse nach Anspruch 4, dadurch gekennzeichnet, daß die lösbaren Positioniermittel von einer deutlich ebenen Struktur gebildet sind mit vorragend ausgebildeten, zylinderförmigen Erhebungen, welche eine Rippe aufweisen, und mit den Ritzeln (7, 8, 9) und ihren jeweiligen Keilnuten zum Fixieren der Winkelstellungen der Ritzel zusammenwirken.

6. Gehäuse nach einem der vorgenannten Ansprüche, dadurch gekennzeichnet, daß außer der Schmierung durch den Kanal der Nockenwelle (16) durch das Gehäuseschild (2) Schmiermittel (50a, 50b) für die Kette (10) vorgesehen sind, welche mit dem Schmierkreislauf (51a, 51b) des Motors verbunden sind, und daß Stege (57) an der Innenwand des am weitesten von der Abschlußfläche des Motors entfernten Gehäuseschildes (1) ausgebildet sind, wobei das Motorschmieröl durch Berieselung dieser Innenwand gekühlt wird.

## Claims

1. Timing gear cassette housing for internal combustion engine, formed by at least two interconnected side walls, comprising a camshaft wheel (8) which is prepositioned to provide, as a result of an input movement controlled by a crankshaft (15), an output movement (16) in synchronism with the input movement, this housing being sealed after it has been placed on one of the faces of the engine, characterized in that it contains at least one crankshaft sprocket wheel (7) and a sprocket wheel (9) for injection pump shaft, which are prepositioned and preoriented in the said housing, and also a chain (10) engaging with the sprocket wheels (7 8, 9) and ensuring a pre-established setting of the timing to permit rotation of the injection pump shaft (17) and of the camshaft (16) in synchronism with the crankshaft (15).

2. Housing according to Claim 1, characterized in that the sprocket wheels (7, 8, 9) are mounted freely in the housing and maintained in position by positioning means (12, 13, 14).

3. Housing according to Claim 2, characterized in that the positioning means (12, 13, 14) are ribbed in the shape of an arc of a circle which match the contour of the gears and sprocket wheels.

4. Housing according to one of the preceding claims, characterized in that it further comprises detachable angular positioning means.

5. Housing according to Claim 4, characterized in that the detachable positioning means are composed of a substantially planar structure from which project cylindrical studs which comprise a rib and which co-operate with the gears and sprocket wheels (7, 8, 9) and their respective keying slots for setting the angular positions of the gears and sprocket wheels.

6. Housing according to one of the preceding claims, characterized in that there is provided, apart from the lubrication along the passage of the camshaft (16) through the side wall (2), means (50a, 50b) for lubricating the chain (10) which communicate with the lubricating circuit (51a, 51b) of the engine, and fins (57) are arranged on the inside of the side wall (1) furthest from the end face of the engine, the engine lubricating oil being cooled by streaming over this inside wall.